# FASCICULE DE BREVET EUROPEEN

(11) **EP 3 224 492 B1**
(45) Date de publication et mention de la délivrance du brevet: **09.01.2019**
(21) Numéro de dépôt: 15808763.5
(22) Date de dépôt: 27.11.2015
(51) Int. Cl.: F16C 7/00, G02B 27/01, G02B 7/182

(54) **AFFICHEUR TETE HAUTE POUR VEHICULE AUTOMOBILE**
HEADUP-ANZEIGE FÜR EIN KRAFTFAHRZEUG
HEAD-UP DISPLAY FOR A MOTOR VEHICLE

(30) Priorité: 28.11.2014 FR 1461681
(43) Date de publication de la demande: 04.10.2017
(73) Titulaire: Valeo Comfort and Driving Assistance, 94046 Créteil Cedex (FR)
(72) Inventeur: BERAUD, Henry, 94046 Créteil CEDEX (FR); CORDUAN, Patrick, 94046 Créteil CEDEX (FR)
(74) Mandataire: Delplanque, Arnaud
(86) Numéro de dépôt international: PCT/FR2015/053252
(87) Numéro de publication internationale: WO 2016/083762

(56) Documents cités:
- EP-A1- 1 550 572
- EP-A1- 2 322 972
- FR-A- 1 079 986
- JP-A- 2000 137 189
- JP-A- 2009 184 406

## Description

### Domaine technique de l'invention

L'invention concerne un afficheur tête haute pour véhicule automobile.

### Arrière-plan technologique

L'invention trouvera ses applications, par exemple, dans les véhicules automobiles pour informer et/ou guider les utilisateurs du véhicule, en particulier son conducteur.

Il est connu d'équiper un véhicule automobile avec un équipement de visionneur tête haute, également connu sous le nom afficheur tête haute ou HUD (pour « head-up display » en anglais). Un tel afficheur est placé dans le champ de vision du conducteur automobile et affiche une information relative à l'état du véhicule, du trafic ou autre.

Ce type d'afficheur tête haute pour véhicule automobile permet l'obtention d'une image avec une luminosité suffisante pour que l'utilisateur, et notamment le conducteur du véhicule, puisse suffisamment voir l'image, et ce en toute situation, jour et nuit et selon les conditions météorologiques (ensoleillé ou nuageux).

Parmi les technologies possibles pour former une telle image grâce à l'afficheur tête haute, la plus utilisée dans l'art antérieur est la technologie d'écran à cristaux liquides, notamment d'écran cristaux liquides à transistors en couches minces, dits TFT-LCD (pour Thin-Film Transistor Liquid Crystal Display en anglais). Ces écrans TFT-LCD nécessitent, pour l'affichage d'une image, un rétro-éclairage généralement effectué par une pluralité de diodes électroluminescentes (DEL ou LED pour Light-Emitting Diode en anglais). En pratique, cet écran TFT-LCD et le rétro-éclairage sont compris dans un ensemble appelé dispositif de génération d'image aussi appelé imageur en anglais : « imager ».

En aval de l'écran selon le sens de déplacement des faisceaux lumineux, l'afficheur tête haute comprend généralement une lame semi-réfléchissante appelé « combiner en anglais », ou une zone de pare-brise semi-réfléchissante et entre l'écran et le combiner ou pare-brise, un dispositif de réflexion à un ou plusieurs miroirs plan ou concaves.

L'image s'affiche au travers de la lame semi-réfléchissante et avec un grossissement et par réflexion semble apparaître au-delà, donc en avant du pare-brise du véhicule.

Toutefois, en fonction des utilisateurs, il est nécessaire de pouvoir régler la position, notamment la hauteur, de l'image projetée sur le pare-brise pour tenir compte par exemple de la taille du conducteur.

A ce jour, on connaît des afficheurs tête-haute où un moteur est en prise directe ou par pignons ou vis sans fin, avec un axe de pivotement du dernier miroir de renvoi, ce qui permet de régler la hauteur de l'image sur le pare-brise.

Cependant, le système est très sensible de sorte qu'il faut utiliser des moteurs pas à pas avec une résolution angulaire très fine qui sont très onéreux. De plus, les systèmes connus sont sujet à des problèmes de vibrations lorsque le véhicule roule. Si l'image projetée vibrait également, elle serait alors donc difficilement lisible, voir illisible.

Des afficheurs tête haute faisant intervenir une bielle pour le mouvement du combiner sont divulgués dans les documents JP 2009 184406 A et EP 2 322 972 A1.

### Objectifs de l'invention

L'invention vise à pallier au moins certains des inconvénients ci-dessus.

En particulier, l'invention vise à fournir un afficheur tête haute dont le miroir de renvoi puisse être réglé avec un moteur pas-à-pas standard.

### Exposé de l'invention

A cet effet, l'invention a pour objet un afficheur tête haute tel que décrit à la revendication 1.

Ainsi, on peut disposer l'unité de moteur à distance du miroir de sorte que l'agencement peut s'adapter plus facilement à des espaces à encombrement réduit.

L'afficheur tête haute peut comporter en outre une ou plusieurs des caractéristiques suivantes prises seules ou en combinaison :
Selon un aspect, l'unité de moteur est disposée dans une zone optiquement morte pour ledit afficheur.

Par zone optiquement morte, on entend une zone où même en éclairage extérieur, par exemple des rayons de soleil, des rayons réfléchis ne parviennent pas vers l'affichage de l'afficheur, notamment sur le pare-brise, ni esthétiquement visible d'extérieur : seule la bielle latérale peut être en partie visible, ce qui ne gêne pas.

Selon un autre aspect, la première portion extrémité de la bielle est articulée sur le support de miroir près d'un bord, éloigné de l'axe de pivotement.

En effet, plus on s'éloigne de l'axe de pivotement, plus le chemin à parcourir pour la bielle est longue pour appliquer un mouvement de rotation / pivotement au miroir. Ainsi, on devient plus précis et on peut utiliser des moteurs d'entrainement avec une résolution plus faible.

La première portion d'extrémité de la bielle peut être est en prise avec un axe d'actionnement porté par le support de miroir et parallèle à l'axe de pivotement du miroir.

Le tenon cylindre est maintenu dans le « V » ou « U » et il n'y a pas de problème de jeu en translation, qui serait causé par des tolérances.

Les ouvertures sont par exemple ouvertes (contour non fermé) selon une direction d'un socle de l'afficheur à tête haute, ce qui facilite le montage. Des alternatives avec des ouvertures à contour fermé sont également envisageables.

L'afficheur comprend, notamment pour chaque portion d'extrémité, un élément élastique, notamment à ressort, maintenant respectivement l'axe d'actionnement et le tenon en prise avec les parois latérales de la portion en « V » ou « U »

Le maintien en contact avec les parois latérales en « V » ou « U » contribuent à supprimer les tolérances sur ce système de commande en pivotement du miroir de renvoi.

Selon encore un autre aspect, l'élément de ressort est un ressort hélicoïdale de traction dont une extrémité est en prise avec la bielle et dont l'autre extrémité est en prise avec un ancrage associé disposé de façon que le ressort soit sensiblement orienté perpendiculaire à l'axe de la bielle et perpendiculaire à l'axe de pivotement.

L'effet sensiblement perpendiculaire n'apporte pas d'effort dans le sens de la translation de la bielle, ni d'effet de retour de pression ou effet ressort permettant de plaquer la bielle à chaque extrémité sur le fond de ses gorges en « V » ou en « U ».

La bielle peut comporter, notamment dans chaque portion d'extrémité, un crochet découpé servant de prise à une extrémité du ressort hélicoïdale.

La distance entre les ouvertures est par exemple comprise entre 40 mm et 160 mm, notamment 90mm.

L'unité de moteur comporte par exemple un motoréducteur.

D'autres avantages et caractéristiques apparaîtront à la lecture de la description de l'invention, ainsi que des dessins annexés sur lesquels :
- la figure 1 montre de façon schématique un afficheur tête haute,
- la figure 2 montre une vue de côté de certains éléments de l'afficheur tête haute selon l'invention,
- la figure 3 montre une vue en perspective élevée de l'afficheur tête haute de la figure 2,
- la figure 4 montre une vue en perspective de l'arrière de l'afficheur tête haute de la figure 2,
- la figure 5 montre une vue schématique en coupe d'un détail V de la figure 2,
- la figure 6 montre une vue schématique en coupe d'un détail VI de la figure 2, et
- la figure 7 montre une vue de face du miroir de renvoi de l'afficheur tête haute de la figure 2.

Sur toutes les figures, les éléments identiques portent les mêmes numéros de référence.

On va maintenant décrire un exemple d'un mode de réalisation en référence aux figures.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

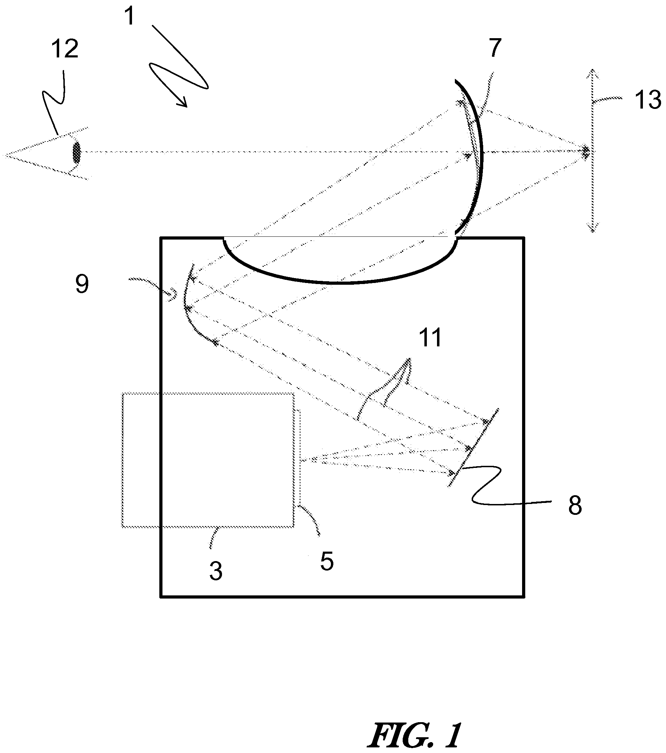

La figure 1 montre un schéma d'un afficheur tête haute 1.

Cet afficheur 1 comprend un dispositif 3 de génération d'image, l'imager.

Ce dispositif 3 de génération d'image comprend par exemple un écran à cristaux liquides, ici un écran 5 à cristaux liquides (écran LCD) par exemple à transistors en couches minces, et un dispositif de rétro-éclairage intégré (non représenté). L'écran 5 à cristaux liquides peut être à matrice active ou passive. L'écran 5 à cristaux liquides à transistors en couches minces est communément appelé écran TFT-LCD multi-couleurs (pour Thin-Film Transistor Liquid Crystal Display en anglais), et permet la formation de l'image par le dispositif 3 de génération d'image.

Le dispositif 3 de génération d'image forme donc une image à l'aide de l'écran à cristaux liquides 5.

En aval de l'écran 5 selon le sens de déplacement des faisceaux lumineux, l'afficheur 1 comprend au moins une lame ou zone semi-réfléchissante 7, de forme droite ou légèrement courbée en section transversale, et un premier dispositif de réflexion 8 et un second dispositif de réflexion 9 interposé sur le trajet de l'image entre l'écran 5 et la lame semi-réfléchissante 7.

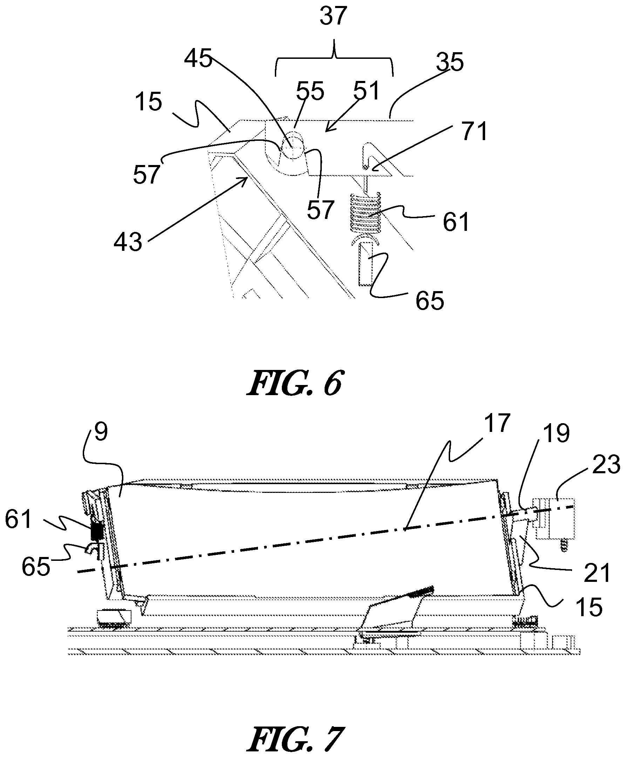

Le premier dispositif de réflexion 8 est par exemple un miroir plan (en anglais, ce miroir est souvent appelé « folding mirror ») tandis que le second dispositif de réflexion 9 est un miroir de renvoi concave (en anglais, ce miroir est souvent appelé « freeform mirror ») permettant l'agrandissement de l'image projetée. Comme on le verra plus en détail par la suite, le miroir de renvoi 9 est monté pivotant et motorisé pour pouvoir pivoter autour d'un axe de pivotement 17 (matérialisé sur la figure 7), ce qui permet en particulier d'adapter la hauteur de l'image produite par rapport à l'utilisateur dont seul l'oeil 12 est représenté de façon schématique.

La lame ou zone semi-réfléchissante 7 qui peut être formée par une zone spécifiquement traitée du pare-brise du véhicule, forme une zone d'affichage semi-réfléchissante recevant des faisceaux lumineux de l'équipement HUD générés par ledit générateur d'image 3.

Cette lame ou zone semi-réfléchissante 7 présente par exemple un pouvoir de réflexion au moins égal à 20%, ce qui permet à l'utilisateur de voir au travers de la lame 7 la route empruntée par le véhicule tout en permettant de voir l'image réfléchie affichée en superposition sur l'environnement.

Sur cette figure 1, le trajet de l'image est symbolisé par trois flèches 11 en pointillé qui se réfléchissent sur les dispositifs de réflexion 8 et 9 avant de s'afficher à travers la lame semi-réfléchissante 7.

Cette dernière permet via un grossissement et/ou par transparence, un affichage de l'image au-delà de la lame semi-réfléchissante, notamment au-delà du pare-brise du véhicule, au niveau d'un écran virtuel 13.

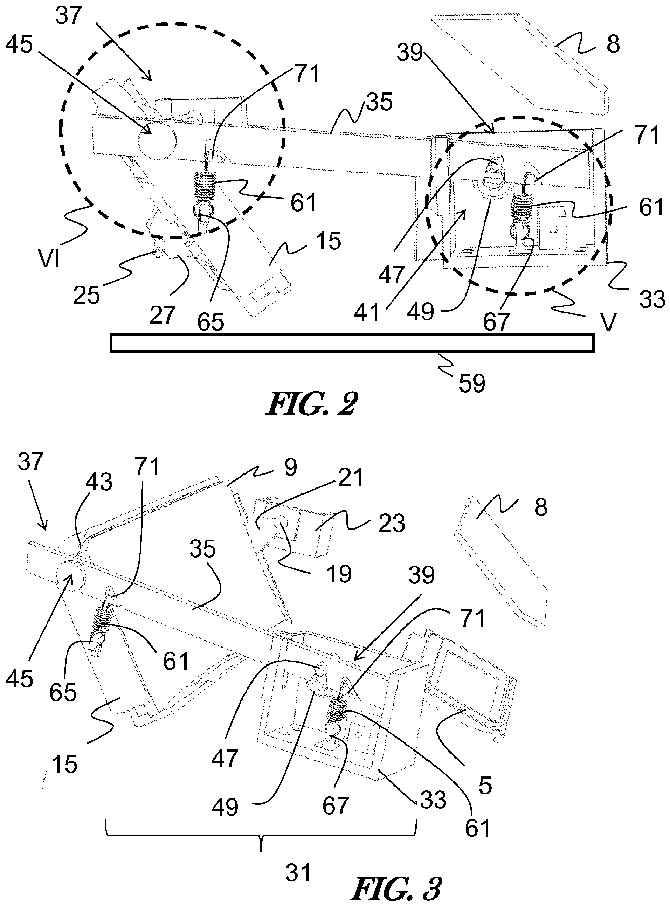

On va maintenant détailler certains éléments de la structure de l'afficheur tête haute 1 selon l'invention en référence aux figures 2 à 7.

Comme visible sur les figures 2 à 4 et 7, le miroir de renvoi 9 est porté par un support de miroir 15 articulé autour de l'axe de pivotement 17 (voir notamment figure 7).

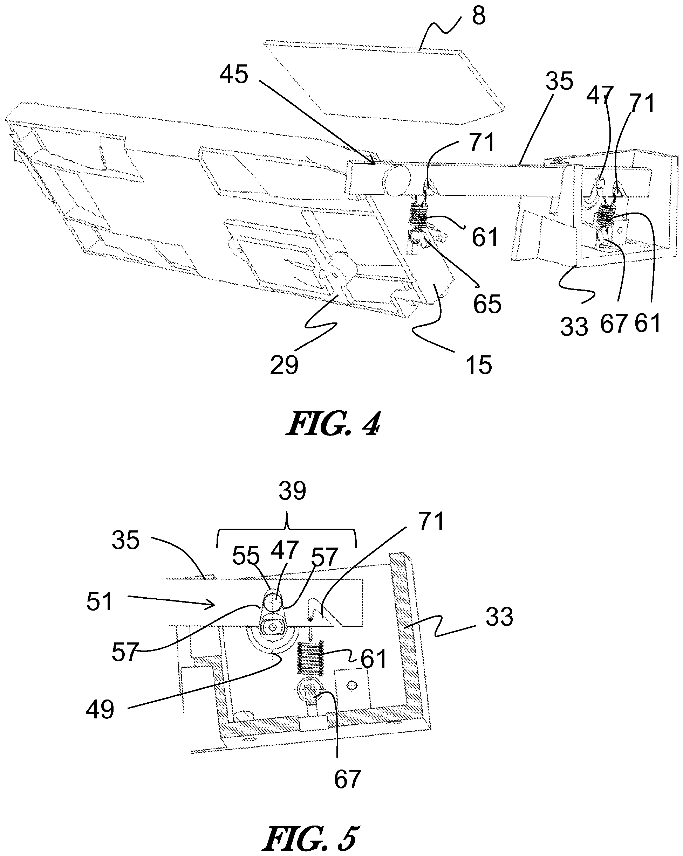

A cet effet, le support de miroir 15 comprend un premier axe 19 porté par une excroissance 21 et coopérant avec un palier latéral 23 ainsi qu'un second axe 25 (voir figure 2) porté par une protubérance arrière 27 du support et coopérant avec un palier arrière 29 (voir figure 4). On comprend donc que le miroir 9 par le pivotement du support de miroir 15 peut pivoter angulairement, ce qui permet d'ajuster en particulier la hauteur de l'image affichée sur l'écran virtuel 13.

Pour réaliser ce mouvement de pivotement, l'afficheur tête haute 1 est équipé d'un système 31 motorisé de déplacement en pivotement du miroir (voir notamment figure 3), comprenant une unité de moteur 33 fixée par exemple dans un boîtier ou sur une base.

Ce système motorisé 31 comprend une bielle 35 s'étendant selon une direction perpendiculaire à l'axe de pivotement 17 et dont une première portion d'extrémité 37 est en prise articulée avec le support de miroir 15 et dont une seconde portion d'extrémité 39, opposée à la première 37, est en prise avec un organe rotatif de sortie 41 de l'unité de moteur 33.

Grâce à ce mécanisme à bielle 35, on peut disposer l'unité de moteur 33 à distance du miroir de sortie 9 de sorte que l'agencement des divers éléments de l'afficheur tête haute 1 peut être déporté de la zone des rayons lumineux et invisible du dehors de l'équipement et de l'entrée de lumière du soleil, pour s'adapter plus facilement à des espaces à encombrement réduit.

Plus spécifiquement, l'unité de moteur 33 est disposée dans une zone optiquement morte pour ledit afficheur tête haute 1.

Par zone optiquement morte, on entend une zone où même en éclairage extérieur fortuit, par exemple des rayons de soleil qui rentrent depuis l'extérieur dans le boîtier de l'afficheur 1 (non représenté), des rayons réfléchis ne parviennent pas vers l'écran virtuel 13 de l'afficheur 1, notamment sur le pare-brise. Cette zone optiquement morte est notamment à l'écart du chemin des rayons lumineux émis depuis le dispositif 3 de génération d'image vers les dispositifs 8 et 9 de réflexion. Ainsi, on ne se trouve pas dans la situation où par exemple une partie de l'unité de moteur 33 apparaîtrait visible par l'utilisateur sur l'écran virtuel 13, ou par un passant extérieur à l'équipement.

La première portion d'extrémité 37 est articulée sur le support de miroir 15 près d'un bord, par exemple le bord supérieur 43, éloigné de l'axe de pivotement 17.

En effet, plus on éloigne l'articulation de la bielle 35 de l'axe de pivotement 17, plus le chemin à parcourir pour la bielle 35 est longue pour appliquer un mouvement de rotation / pivotement au miroir de renvoi 9. Ainsi, on peut utiliser des moteurs d'entrainement avec une résolution plus faible tout en restant précis pour le déplacement du miroir de renvoi 9.

Plus précisément, la première portion d'extrémité 37 de la bielle 35 est en prise avec un axe d'actionnement 45 porté par le support de miroir 15 et parallèle à l'axe de pivotement du miroir 17.

Quant à la deuxième portion d'extrémité 39 de la bielle 35, celle-ci est en prise avec un tenon 47 porté par un disque rotatif 49 entraîné par l'unité de moteur 33. L'unité de moteur 33 comprend par exemple un moteur pas-à-pas et un motoréducteur dont l'axe de sortie entraîne le disque rotatif 49. Le moteur pas-à-pas peut être un moteur standard avec une rotation supérieure à 0,25° par pas, notamment de 0,3° par pas.

Comme on le voit sur les figures 5 et 6, la coopération de l'axe d'actionnement 45 et du tenon 47 avec la bielle 35 est réalisée par l'intermédiaire d'ouvertures 51 respectivement en prise avec l'axe d'actionnement 45 et le tenon 47.

Plus en détail, chaque ouverture 51 présente une portion avec une forme générale en « V » ou « U » dont le fond 55 présente un écartement inférieur au diamètre de l'axe d'actionnement 47 ou du tenon 47 avec qui elle coopère.

Il en résulte que l'axe d'actionnement 45 ou le tenon 47 est toujours en prise avec les bords latéraux 57 convergents de l'ouverture 51, par exemple avec une pente inférieure à 10°, de sorte que l'on supprime tout problème de jeu dû aux tolérances, aussi bien axialement, le long de l'axe de la bielle 35 que perpendiculaire à cet axe. On supprime aussi les problèmes d'hystérésis.

Comme on le voit sur les figures 2 à 6, les ouvertures 51 sont par exemple ouvertes selon une direction d'un socle 59 de l'afficheur à tête haute 1 (voir figure 2), ce qui facilite le montage.

Pour assurer un contact et une prise ferme de l'axe d'actionnement 45 et du tenon 47 avec les bords latéraux 57, même en cas de vibration du véhicule, un élément élastique 61 notamment à ressort est prévu à chaque portion d'extrémité 37 et 39.

A titre d'exemple, l'élément de ressort 61 est un ressort hélicoïdal de traction dont une extrémité est en prise avec la bielle 35 et dont l'autre extrémité est en prise avec un ancrage 65, 67 associé, disposé de façon que le ressort 61 soit sensiblement orienté perpendiculaire à l'axe de la bielle 35 et perpendiculaire à l'axe de pivotement 17.

Du fait de l'orientation sensiblement perpendiculaire du ressort 61, aucun effort n'est appliqué par ces ressorts dans le sens de la translation de la bielle de sorte que l'unité moteur 33 peut rester avec un dimensionnement faible.

Selon une variante non représentée, on peut prévoir qu'un seul ressort dont une extrémité est en prise avec la bielle 35 au milieu de celle-ci et accroché sur le socle 59. Par ailleurs, l'élément élastique peut comprendre une lame ressort, un ressort de compression, ou éléments élastomères.

Pour l'extrémité du ressort 61 en prise avec la bielle 35, cette dernière comporte par exemple dans chaque portion d'extrémité 37, 39 un crochet découpé 71 servant de prise au ressort hélicoïdal 63.

Pour avoir une bonne démultiplication sans prendre d'angle parasite et s'éloigner suffisamment de la zone optique des rayons, entre le pivotement du miroir 9 d'une part et la rotation du disque rotatif 49 d'autre part, la distance entre les ouvertures 51 est comprise entre 40mm et 160mm, notamment 90mm.

En fonctionnement, pour ajuster la hauteur de l'image virtuelle sur l'écran virtuel 13, il suffit de faire tourner le disque rotatif 49 de plusieurs pas très petits, soit un petit angle, ce qui a pour effet de pousser ou de tirer la bielle 35 de sorte que le support de miroir 15 et donc aussi le miroir 9 lui-même pivote très légèrement, très finement.

A titre d'exemple, grâce au système 31 avec la bielle 35, quelques quatre pas d'un moteur pas-à-pas de 0.3° standard correspond à environ 0,15° d'angle de pivotement du miroir de renvoi 9, ce qui est la précision requise pour pouvoir bien positionner l'image projetée. De plus, du fait de la suppression efficace des tolérances et d'hystérésis, on prévient également tout problème de vibration qui pourrait se poser lorsque le véhicule roule.

Grâce aux ouvertures convergentes 51, on a donc supprimé les problèmes de tolérances et d'hystérésis ainsi que de vibrations. Ce montage permet en outre l'utilisation d'un moteur pas-à-pas standard, peu onéreux.

## Revendications

1. Afficheur tête haute (1) comprenant
- un miroir de renvoi (9) porté par un support de miroir (15) articulé autour d'un axe de pivotement (17),
- un système (31) motorisé de déplacement en pivotement du miroir de renvoi (9), comprenant une unité de moteur (33), tel que le système motorisé (31) comprend une bielle (35) s'étendant selon une direction perpendiculaire à l'axe de pivotement (17) et dont une première portion d'extrémité (37) est en prise articulée avec le support de miroir (15) et dont une seconde portion d'extrémité (39), opposée à la première (37), est en prise avec un organe rotatif de sortie (47,49) de l'unité de moteur (33), tel que la deuxième portion d'extrémité (39) de la bielle (35) est en prise avec un tenon (47) porté par un disque (49) rotatif entraîné par l'unité de moteur (33), et tel que la bielle (35) comprend à chacune de ses première et seconde portions d'extrémités (37, 39) une ouverture (51) respectivement en prise avec l'axe d'actionnement (45) et le tenon (47), **caractérisé en ce que** chaque ouverture (51) présente une portion avec une forme générale en « V » ou « U » dont le fond (55) présente un écartement inférieur au diamètre de l'axe d'actionnement (45) ou du tenon (47) avec qui elle coopère.

2. Afficheur selon la revendication 1, **caractérisé en ce que** l'unité de moteur (33) est disposée dans une zone optiquement morte pour ledit afficheur (1).

3. Afficheur selon l'une quelconque des revendications 1 ou 2, **caractérisé en ce que** la première portion extrémité (37) de la bielle (35) est articulée sur le support de miroir (15) près d'un bord (43), éloigné de l'axe de pivotement (17).

4. Afficheur selon l'une quelconque des revendications 1 à 3, **caractérisé en ce que** la première portion d'extrémité (37) de la bielle (35) est en prise avec un axe d'actionnement (45) porté par le support de miroir (15) et parallèle à l'axe de pivotement du miroir (17).

5. Afficheur selon la revendication 1, **caractérisé en ce que** lesdites ouvertures (51) sont ouvertes selon une direction d'un socle (59) de l'afficheur à tête haute (1).

6. Afficheur selon l'une quelconque des revendications 1 à 5, **caractérisé en ce qu'**il comprend, notamment pour chaque portion d'extrémité (37, 39), un élément élastique (61), notamment à ressort, maintenant respectivement l'axe d'actionnement (45) et le tenon (47) en prise avec les parois latérales (57) de la portion en « V » ou « U ».

7. Afficheur selon la revendication 6, **caractérisé en ce que** l'élément de ressort (61) est un ressort hélicoïdale de traction dont une extrémité est en prise avec la bielle (35) et dont l'autre extrémité est en prise avec un ancrage associé (65, 67) disposé de façon que le ressort (61) soit sensiblement orienté perpendiculaire à l'axe de la bielle (35) et perpendiculaire à l'axe de pivotement (17).

8. Afficheur selon la revendication 7, **caractérisé en ce que** la bielle (35) comporte, notamment dans chaque portion d'extrémité (37, 39), un crochet découpé servant de prise à une extrémité du ressort hélicoïdale (61).

9. Afficheur selon l'une quelconque des revendications 1 à 8, **caractérisé en ce que** la distance entre les ouvertures (51) est comprise entre 40 mm et 160 mm, notamment 90mm.

10. Afficheur selon l'une quelconque des revendications 1 à 9, **caractérisé en ce que** l'unité de moteur (33) comporte un motoréducteur.

## Patentansprüche

1. Head-Up-Anzeige (1), umfassend
- einen Umlenkspiegel (9), der von einem Spiegelträger (15) getragen wird, der um eine Schwenkachse (17) herum angelenkt ist,
- ein angetriebenes System (31) zur Schwenkbewegung des Umlenkspiegels (9), umfassend eine Motoreinheit (33),
so dass das angetriebene System (31) eine Pleuelstange (35) umfasst, die sich in einer Richtung senkrecht zur Schwenkachse (17) erstreckt, und ein erster Endabschnitt (37) derer in Gelenkeingriff mit dem Spiegelträger (15) steht, und ein zweiter Endabschnitt (39) derer, der dem ersten (37) gegenüberliegt, mit einem Ausgangsdrehelement (47, 49) der Motoreinheit (33) in Eingriff steht,
so dass der zweite Endabschnitt (39) der Pleuelstange (35) mit einem Bolzen (47) in Eingriff steht, der von einer Drehscheibe (49) getragen wird, die von der Motoreinheit (33) angetrieben wird,
und so dass die Pleuelstange (35) an jedem von seinem ersten und zweiten Endabschnitt (37, 39) eine Öffnung (51) umfasst, die jeweils mit der Betätigungsachse (45) und dem Bolzen (47) in Eingriff steht,
**dadurch gekennzeichnet, dass** jede Öffnung (51) einen Abschnitt mit einer allgemeinen V- oder U-förmigen Form aufweist, dessen Boden (55) einen Abstand aufweist, der geringer als der Durchmesser der Betätigungsachse (45) oder des Bolzens (47) ist, mit dem sie zusammenwirkt.

2. Anzeige nach Anspruch 1, **dadurch gekennzeichnet, dass** die Einheit des Motors (33) in einem Bereich angeordnet ist, der für die Anzeige (1) optisch tot ist.

3. Anzeige nach einem der Ansprüche 1 oder 2, **dadurch gekennzeichnet, dass** der erste Endabschnitt (37) der Pleuelstange (35) an dem Spiegelträger (15) in der Nähe eines Randes (43) angelenkt ist, der von der Schwenkachse (17) entfernt ist.

4. Anzeige nach einem der Ansprüche 1 bis 3, **dadurch gekennzeichnet, dass** der erste Endabschnitt (37) der Pleuelstange (35) mit einer Betätigungsachse (45) in Eingriff steht, die von dem Spiegelträger (15) getragen wird und parallel zur Schwenkachse des Spiegels (17) verläuft.

5. Anzeige nach Anspruch 1, **dadurch gekennzeichnet, dass** die Öffnungen (51) in einer Richtung eines Sockels (59) der Head-Up-Anzeige (1) geöffnet sind.

6. Anzeige nach einem der Ansprüche 1 bis 5, **dadurch gekennzeichnet, dass** sie insbesondere für jeden Endabschnitt (37, 39) ein elastisches Element (61), insbesondere mit Feder, umfasst, das die Betätigungsachse (45) bzw. den Bolzen (47) mit den Seitenwänden (57) des V- oder U-förmigen Abschnitts in Eingriff hält.

7. Anzeige nach Anspruch 6, **dadurch gekennzeichnet, dass** das Federelement (61) eine Zug-Schraubenfeder ist, deren eines Ende mit der Pleuelstange (35) in Eingriff steht, und deren anderes Ende mit einer zugehörigen Verankerung (65, 67) in Eingriff steht, die so angeordnet ist, dass die Feder (61) im Wesentlichen senkrecht zur Achse der Pleuelstange (35) und senkrecht zur Schwenkachse (17) orientiert ist.

8. Anzeige nach Anspruch 7, **dadurch gekennzeichnet, dass** die Pleuelstange (35) insbesondere in jedem Endabschnitt (37, 39) einen ausgeschnittenen Haken umfasst, der als Halt an einem Ende der Schraubenfeder (61) dient.

9. Anzeige nach einem der Ansprüche 1 bis 8, **dadurch gekennzeichnet, dass** der Abstand zwischen den Öffnungen (51) zwischen 40 mm und 160 mm, insbesondere 90mm beträgt.

10. Anzeige nach einem der Ansprüche 1 bis 9, **dadurch gekennzeichnet, dass** die Motoreinheit (33) einen Getriebemotor umfasst.

## Claims

1. Head-up display device (1) comprising
- a deflecting mirror (9) held by a mirror holder (15) articulated about a pivoting axis (17),
- a motor-driven system (31) for moving the deflecting mirror (9) in a pivoting manner, comprising a motor unit (33),
such that the motor-driven system (31) comprises a connecting rod (35) extending in a direction perpendicular to the pivoting axis (17) and of which a first end portion (35) is engaged with the mirror holder (15) in an articulated manner, and of which a second end portion (39), opposite to the first end portion (37), is engaged with a rotary output member (47, 49) of the motor unit (33),
such in that the second end portion (39) of the connecting rod (35) can be engaged with a tenon (47) carried by a rotary disk (49) driven by the motor unit (33), and
such that the connecting rod (35) comprises, at each of its first and second end portions (37, 39), an opening (51) respectively engaged with the actuating spindle (45) and the tenon (47),
**characterized in that** each opening (51) has a portion with a generally "V" or "U" shape whose bottom (55) has a spacing less than the diameter of the actuating spindle (45) or of the tenon (47) with which it cooperates.

2. Display device according to Claim 1, **characterized in that** the motor unit (33) is placed in an optically dead zone for said display device (1).

3. Display device according to either one of Claims 1 and 2, **characterized in that** the first end portion (37) of the connecting rod (35) is articulated onto the mirror holder (15) close to an edge (43), distant from the pivoting axis (17).

4. Display device according to any one of Claims 1 to 3, **characterized in that** the first end portion (37) of the connecting rod (35) is engaged with an actuating spindle (45) carried by the mirror holder (15) and parallel with the pivoting axis of the mirror (17).

5. Display device according to Claim 1, **characterized in that** said openings (51) are open in the direction of a base (59) of the head-up display device (1).

6. Display device according to any one of Claims 1 to 5, **characterized in that** it comprises, notably for each end portion (37, 39), an elastic element (61), notably a spring element, respectively maintaining the actuating spindle (45) and the tenon (47) engaged with the lateral walls (57) of the "V" or "U" shaped portion.

7. Display device according to Claim 6, **characterized in that** the spring element (61) is a helical tension spring one end of which is engaged with the connecting rod (35) and the other end of which is engaged with an associated anchoring point (65, 67) disposed in such a way that the spring (61) is substantially oriented perpendicular to the axis of the connecting rod (35) and perpendicular the pivoting axis (17).

8. Display device according to Claim 7, **characterized in that** the connecting rod (35) comprises, notably in each end portion (37, 39), a cut-out hook serving as an engagement point at one end of the helical spring (61).

9. Display device according to any one of Claims 1 to 8, **characterized in that** the distance between the openings (51) is between 40 mm and 160 mm, notably 90 mm.

10. Display device according to any one of Claims 1 to 9, **characterized in that** the motor unit (33) comprises a motor reducer.
